# EUROPEAN PATENT APPLICATION

(11) **EP 2 425 883 A1**
(43) Date of publication of application: **07.03.2012**
(21) Application number: 10174964.6
(22) Date of filing: 01.09.2010
(51) Int. Cl.: B01D 17/02, B01D 19/00

(54) **Fluid treatment apparatus**

(71) Applicant: Merpro Tortek LTD, Angus DD10 9JA (GB)
(72) Inventor: Main, Corin, Westhill, AB32 6PU (GB); Han, Shejiao, Angus, DD10 8lR (GB); Podger, Francis Timothy John, Dundee, DD5 3NS (GB)
(74) Representative: Haley, Stephen

(57) **Abstract**

An apparatus for separating a mixture of a less dense fluid component and a more dense fluid component, comprising: an annular chamber having a vertical axis and opening upwardly; an inlet for receiving the mixture in the bottom of the annular chamber, the inlet being configured to cause the mixture to swirl about the vertical axis as it leaves the top of the annular chamber to create a vortex extending above the chamber; a first axially aligned outlet of the annular chamber for the discharge of primarily the less dense fluid component from the vortex; and a means for introducing gas bubbles into the mixture before it leaves the chamber.

## Description

The present invention relates to an apparatus and method for separating a mixture comprising two fluids of different densities, such as a mixture of oil and water extracted from a well.

In the oil and gas industry, water is often present during an oil and gas extraction from a well. The water mixes with the oil and therefore cannot simply be returned to the sea or into a disposal well, for example, without first being treated to reduce the amount of oil present. Strict legislation is in place to ensure that any water being returned to the sea is sufficiently free of oil and therefore new and improved methods are constantly being sought to maximise the separation of oil and water.

An existing apparatus and method for separating a mixture of oil and water mixture is disclosed in US-B-6436298, wherein a mixture of oil and water is caused to swirl before being introduced into a vessel, which forces dispersed oil droplets to coalesce, thereby speeding up separation. Centrifugal forces generated by the swirling mixture cause the less dense oil to migrate towards the axis of the vessel and be drawn down the centre of the vortex, while the more dense water is forced away from the axis, where it may then separate further under gravity towards the bottom of the vessel.

Improvements to such apparatus and methods are constantly being sought, both to reduce the residence time of the mixture in the apparatus and to improve the effectiveness of the separation process.

According to the present invention there is provided an apparatus for separating a mixture of a less dense fluid component and a more dense fluid component, comprising: an annular chamber having a vertical axis and opening upwardly; an inlet for receiving the mixture in the bottom of the annular chamber, the inlet being configured to cause the mixture to swirl about the vertical axis as it leaves the top of the annular chamber to create a vortex extending above the chamber; a first axially aligned outlet of the annular chamber for the discharge of primarily the less dense fluid component from the vortex; and a means for introducing gas bubbles into the mixture before it leaves the chamber.

According to the present invention there is also provided a vessel for separating a mixture of two fluids having different densities, comprising: an apparatus as described above, arranged such that the annular chamber extends vertically into the vessel; and a second outlet arranged towards the bottom of the vessel and spaced from the first outlet for the discharge of the primarily of the more dense fluid component of the mixture.

According to the present invention there is also provided a method for separating a mixture of a less dense fluid component and a more dense fluid component, comprising the steps of: providing an apparatus having an annular chamber with a vertical axis which opens upwardly, introducing the mixture under pressure into the apparatus through an inlet arranged in the bottom of the annular chamber configured to cause the mixture to swirls about the vertical axis as it leaves the annular chamber to create a vortex extending above the chamber; removing primarily the less dense fluid component from the vortex through an axially aligned outlet of the annular chamber; and introducing gas bubbles into the mixture before it leaves the chamber.

The gas bubbles that are introduced to the mixture are, preferably, micro bubbles and are, preferably, introduced to the mixture through at least a portion of one or more walls that define the separation apparatus. A discharge pipe for the less dense fluid may be blocked during the introduction of gas bubbles into the apparatus, if required.

Advantageously, the introduction of gas bubbles into the mixture reduces the residence time required to allow the separation of the mixture due to the effect of the coalescence of oil droplets on the gas bubbles in the swirling mixture.

In addition, existing separation apparatus can also be modified to provide a separation apparatus according to the present invention on a retrofit basis.

An example of the present invention will now be described, with reference to the accompanying figures, in which:
Figure 1 shows a pressure vessel with an existing swirl-inducing apparatus installed;
Figure 2 is a cross section showing detail of the apparatus of Figure 1;
Figure 3 shows an apparatus according to a first example of the present invention;
Figure 4 shows an apparatus according to a second example of the present invention; and
Figure 5 is a schematic diagram of an apparatus according to the present invention installed in one or more vessels.

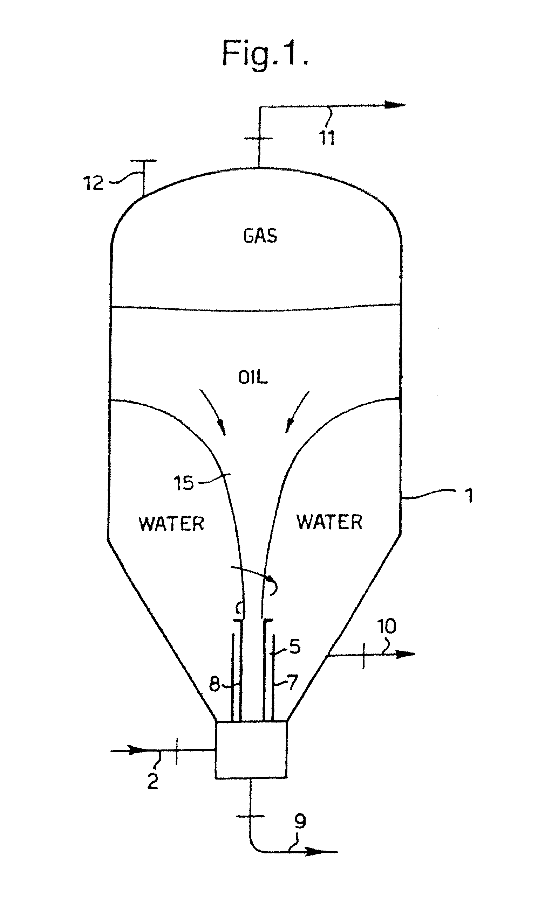

Figure 1 shows a pressure vessel 1 having an apparatus installed for separating a mixture of less dense fluid component and a more dense fluid component, i.e. two fluids having different densities, such as oil and water in this example. The pressure vessel 1 has a conical lower portion, a cylindrical midportion and a curved upper portion.

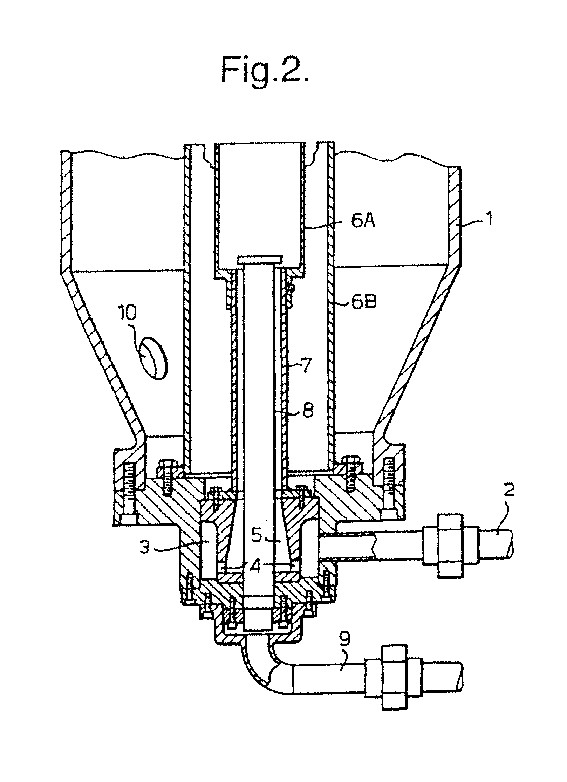

As can be seen from Figure 2, the separation apparatus comprises an inlet 5 that is fluidly connected to an annular chamber 7, which acts as a fluid supply duct, arranged to extend a substantial distance vertically into the pressure vessel 1. Arranged coaxially within the annular chamber 7 is a fluid discharge duct 8.

In this example, the fluid discharge duct 8 which passes through the apparatus is arranged to lead to a continuous oil phase outlet 9 at the base of the pressure vessel 1. A continuous water phase outlet 10 is provided in the wall of the pressure vessel 1 towards the bottom of the pressure vessel 1 and a third outlet 11 for gas is provided at the top of the pressure vessel 1, as is a pressure controller 12.

A shield 6A, 6B may be provided either attached to the end of the annular chamber 7, as shown at 6A, or may be provided spaced from the annular chamber 7, and attached to the base of the vessel 1 as shown at 6B.

In the example shown, a fluid inlet 2 is provided at the bottom of the vessel 1, arranged to supply the mixture to an annular cavity 3 that surrounds the base of the apparatus such that mixture enters the inlet chamber 5 of the separation apparatus via inlets 4. Alternatively, a fluid inlet 2 may be arranged to connect directly to an inlet 4. In use, the mixture is supplied to the apparatus via the fluid inlet 2 at high pressure.

As the fluids pass through the inlet 4 they are caused to swirl by the positioning of the inlet 4 and/or configuration of the inlet chamber 5 in the apparatus. Centrifugal forces occur in the mixture in the apparatus as a result of the swirling motion, which is maintained as the fluids leave the annular chamber 7 and generates a vortex 15 within the vessel 1. The centrifugal forces within the swirling mixture cause drops of the less dense oil in the mixture to coalesce, and form a layer on the surface of the more dense water. Vessel pressure forces the less dense oil down through the centre of the vortex and out through the fluid discharge duct 8. The water undergoes further gravity separation in the lower part of the vessel 1 and exits the vessel through the continuous water phase outlet 10. At the same time, gas precipitates out of the oil and water and collects at the top of the vessel 1, where it can be exhausted through the gas outlet 11.

In a preferred embodiment of the present invention, at least a portion of a wall that defines the apparatus is arranged to be sufficiently porous to allow a pressurised gas to diffuse through it, for example by comprising a porous material, or a material that is arranged to be porous, such as ceramic. In addition, a gas chamber 14 is arranged to seal around the porous portion of the wall so that gas supplied to the gas chamber 14 under pressure will diffuse through the porous portion of the wall of the apparatus to form gas bubbles 16 in the swirling mixture contained within before it leaves the annular chamber 7. The gas bubbles 16 formed are, preferably, micro bubbles, generally having a diameter of around 30 to 50µm.

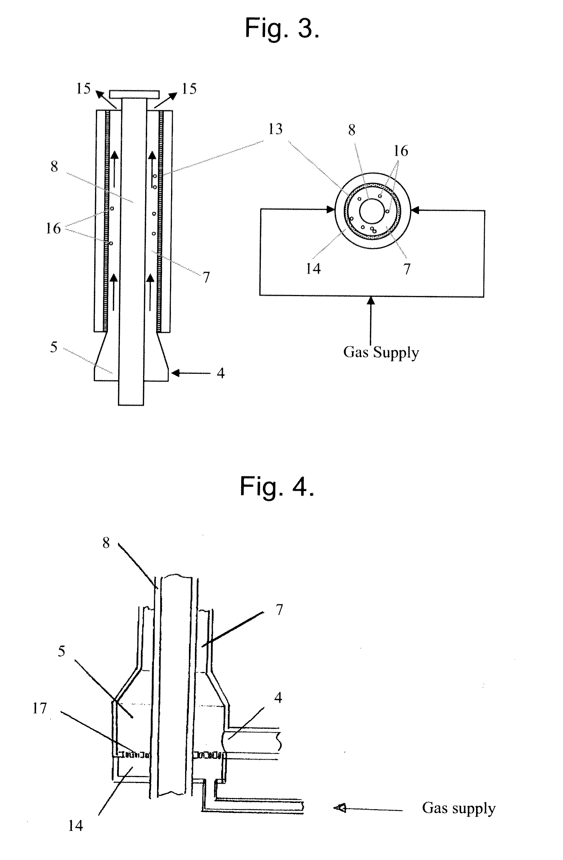

Figure 3 shows a first example of an apparatus according to the present invention, wherein the wall 13 which defines the annular chamber 7 is arranged to be porous, as described above, and a gas chamber 14 is arranged to extend along the wall 13 and provide a seal around it.

Figure 4 shows a second example of an apparatus according to the present invention, wherein the wall 17 that defines the base of the inlet chamber 5 is arranged to be porous, as described above, and a gas chamber 14 is provided beneath the inlet chamber 5 and arranged to provide a seal around it.

In another embodiment, at least a portion of a pipe, or similar, that comprises the fluid inlet 2, or is arranged to supply mixture to the inlet 4 of the apparatus, can be arranged to be porous and have a gas chamber arranged around it in a similar manner to the wall 13 and gas chamber 14 arrangement described in Figure 3, to enable the introduction of gas bubbles 16 into the mixture as it enters the apparatus.

In a further embodiment, gas bubbles 16 may be introduced into the mixture before it leaves the annular chamber 7 via an inlet to the apparatus, which may be separate from, or integral to, the inlet 4 for the mixture and configured to introduce gas into the apparatus in the form of bubbles.

Furthermore, an apparatus according to the present invention may comprise a combination of any of the arrangements described herein.

Optionally, the present invention may also comprise an oscillator, or other suitable apparatus, arranged to make the pressurised gas fed into the gas chamber 14 pulsate as it diffuses through the porous portion of the wall 13, 17 to assist in the creation of gas bubbles 16 in the mixture contained within the apparatus.

Existing methods of introducing gas bubbles 16 into the mixture, such as using multiphase bubble pumps and eductors, can create strong shear forces that break down large oil droplets into smaller ones and hence makes separating the two fluids in the mixture difficult.

Advantageously, introducing gas bubbles into the mixture using an apparatus according to the present invention ensures that oil droplet sizes in the mixture are well preserved.

Furthermore, introducing gas bubbles 16 into the mixture before it leaves the annular chamber 7 has the effect that strong centrifugal forces in the swirling mixture within the apparatus force less dense gas bubbles to migrate towards the centre axis of the annular chamber 7, where they collide and coalesce with oil droplets to enhance separation of the mixture, rather than simply moving along the interior side of the apparatus wall. The centrifugal forces decrease after the swirling mixture leaves the annular chamber and hence so does this beneficial separation effect.

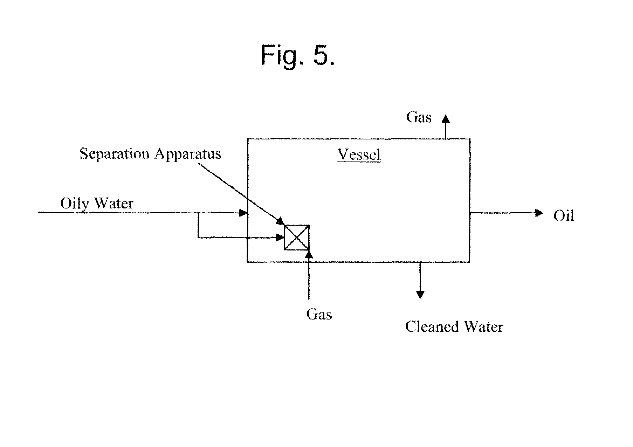

Figure 5 is a schematic diagram of an apparatus according to the present invention installed in one or more vertical or horizontal vessels 1 having one or more chambers. A mixture of two fluids having different densities, in this example oil and water forming a mixture being known as "oily water", is passed into one or more apparatus of the present invention, each apparatus being arranged in a substantially vertical orientation within the vessel 1 or chamber.

Gas bubbles 16 are introduced to the mixture within the apparatus, before it leaves the annular chamber 7 and enters the vessel or chamber, to assist in the separation of the mixture into its separate fluid components as it swirls. The added gas can then be vented from the vessel 1, having served its purpose.

Advantageously, the present invention can be adapted to replace existing separation apparatus in pressure vessels, as described with reference to Figure 1, without having to modify the pressure vessel or its installation. It is also possible to modify an existing separation apparatus to enable gas bubbles to be introduced, as described above, to provide an apparatus according to the present invention.

## Claims

1. An apparatus for separating a mixture of a less dense fluid component and a more dense fluid component, comprising:
an annular chamber having a vertical axis and opening upwardly;
an inlet for receiving the mixture in the bottom of the annular chamber, the inlet being configured to cause the mixture to swirl about the vertical axis as it leaves the top of the annular chamber to create a vortex extending above the chamber;
a first axially aligned outlet of the annular chamber for the discharge of primarily the less dense fluid component from the vortex; and
a means for introducing gas bubbles into the mixture before it leaves the chamber.

2. The apparatus of claim 1, wherein the inlet comprises an inlet chamber arranged at the bottom of the annular chamber for receiving the mixture via the inlet and inducing swirl into the mixture.

3. The apparatus of claim 1 or 2, wherein at least a portion of a wall that defines the apparatus is arranged to be sufficiently porous to allow a gas to diffuse through it.

4. The apparatus of claim 3, wherein the porous portion of wall comprises a porous material or a material configured to be porous.

5. The apparatus of claim 4, wherein the material configured to be porous is ceramic.

6. The apparatus of any one of claims 3 to 5, further comprising a gas chamber arranged to seal around the porous portion of wall for providing a gas under pressure to diffuse through the porous portion of wall.

7. The apparatus of any one of claims 3 to 6, wherein the gas bubbles that are introduced to the mixture are configured to have a diameter of around 30 to 50µm.

8. The apparatus of any one of claims 3 to 7, further comprising means for causing the flow of gas to pulsate as it passes through the porous portion of wall.

9. The apparatus of any one of claims 3 to 8, wherein the wall defines the annular chamber.

10. The apparatus of any one of claims 3 to 9, wherein the wall defines the base of the inlet chamber.

11. The apparatus of claim 1 or 2, wherein the means for introducing gas bubbles comprises an inlet arranged to introduce gas bubbles into the mixture entering the apparatus.

12. A vessel for separating a mixture of two fluids having different densities, comprising:
an apparatus according to any preceding claim arranged such that the annular chamber extends vertically into the vessel; and
a second outlet arranged towards the bottom of the vessel and spaced from the first outlet for the discharge of the primarily of the more dense fluid component of the mixture.

13. A method for separating a mixture of a less dense fluid component and a more dense fluid component, comprising the steps of:
providing an apparatus having an annular chamber with a vertical axis which opens upwardly,
introducing the mixture under pressure into the apparatus through an inlet arranged in the bottom of the annular chamber configured to cause the mixture to swirls about the vertical axis as it leaves the annular chamber to create a vortex extending above the chamber;
removing primarily the less dense fluid component from the vortex through an axially aligned outlet of the annular chamber; and
introducing gas bubbles into the mixture before it leaves the chamber.

14. The method of claim 13, further comprising the step of:
removing primarily the more dense fluid component through a further outlet provided in a region below the layer of the less dense fluid component.

15. The method of claim 13 or 14, wherein introducing gas bubbles comprises forcing a gas through at least a portion of a wall that defines part of the apparatus, said portion of wall being arranged to be porous.
